# EUROPÄISCHE PATENTANMELDUNG

(11) **EP 1 961 285 A1**
(43) Veröffentlichungstag der Anmeldung: **27.08.2008**
(21) Anmeldenummer: 08002709.7
(22) Anmeldetag: 14.02.2008
(51) Int. Cl.: A01C 7/20

(54) **Sämaschine**

(30) Priorität: 26.02.2007 DE 102007009594
(71) Anmelder: RAUCH LANDMASCHINENFABRIK GMBH, D-76547 Sinzheim (DE); KUHN S.A., 67700 Saverne (FR)
(72) Erfinder: Klein, Frederic, 67500 Haguenau (FR); Kremser, Jeremy, 67660 Betschdorf (FR); Schickinger, Manfred, 76547 Sinzheim (DE); Kästel, Andreas, 76532 Baden-Baden (DE); Schickinger, Harald, 76547 Sinzheim (DE); Dircks, Hartmut, 76547 Sinzheim (DE); Rauch, Norbert, 77815 Bühl (DE)
(74) Vertreter: Lichti, Heiner

(57) **Zusammenfassung**

Eine Sämaschine mit einem Saatgutbehälter, einem diesen tragenden Rahmen und einer am Rahmen höhenverstellbar und lösbar angebrachten Säeinrichtung weist einen sich über deren Breite erstreckenden Querträger und eine in Laufrichtung der Sämaschine davor und dahinter angeordnete, der Anzahl der Säreihen entsprechende Anzahl von Konsolen auf, von denen sich benachbarte Konsolen jeweils von vorne bzw. von hinten am Querträger abstützen und etwa im Abstand zweier Säreihen nach vorne bzw. nach hinten erstrecken und im Bereich ihrer Enden jeweils eine Lageraufnahme für je einen vorderen bzw. hinteren Schararm aufweisen, die an der Konsole unter Federeinwirkung schwenkbar gelagert sind, wobei die zur Erzeugung eines variablen Schardrucks wirksame Federkraft über eine zentral auf alle Schararme wirkende Verstelleinrichtung, die etwa vertikal unterhalb des Querträgers angeordnet ist, einstellbar ist. Durch diese Ausbildung ergibt sich eine günstige Schwerpunktlage bei geringer Bauteilmasse.

## Beschreibung

Die Erfindung betrifft eine Sämaschine mit einem Saatgutbehälter, einem diesen tragenden Rahmen und einer am Rahmen höhenverstellbar und lösbar angebrachten Säeinrichtung mit in Laufrichtung der Sämaschine in zwei Reihen hintereinander und in den Reihen jeweils versetzt zueinander angeordneten Säscharen, die über jeweils einen Schararm an der Säeinrichtung an einer im Wesentlichen horizontalen Achse schwenkbar gelagert sind, wobei jeder Schararm unter Wirkung einer einen Schardruck erzeugenden Federkraft steht und die Federkraft aller Schararme über eine zentrale Verstelleinrichtung einstellbar ist.

Eine Sämaschine in gezogener Bauart ist aus der GB 2 043 419 bekannt. Innerhalb eines sich quer zur Laufrichtung erstreckenden, horizontalen Grundrahmens ist ein im Umriss kleinerer Rechteckrahmen angeordnet , dessen laufrichtungsparallele Balken jeweils eine Art Wiegebalken bilden, die über ein mittiges Balkenlager höhenverstellbar an den laufrichtungsparallelen Balken des Grundrahmens abgestützt sind. Die parallelen Querholme dieses Rahmens dienen abwechselnd als Widerlager für Druckfedern, die sich andererseits von oben auf den versetzt zueinander und hintereinander angeordneten Schararmen abstützen. Über das höhenverstellbare Gelenk der Wiegebalken kann der Federdruck der Druckfedern und damit der Schardruck für das gleichmäßige Eindringen der Säschare in den Boden eingestellt werden. In Laufrichtung der Sämaschine vorhandenen Wellen oder Bodenunebenheiten folgen die Säschare durch federnde Auslenkung der Schararme. Der große Nachteil dieser bekannten Sämaschine besteht in dem aufwändigen und schweren Aufbau. Die Sämaschine lässt sich auch nicht als Anbaumaschine einsetzen, weil bei einem Ausheben der Sämaschine die Schararme und damit die Säschare durch die Druckfedern unbegrenzt nach unten gedrückt würden, also im Gegensatz zum gewollten Ziel nicht vom Boden freikommen.

Bei einer anderen bekannten Sämaschine in gezogener Bauweise (EP-A-0 728 407) ist ein sich etwa über die Arbeitsbreite erstreckender Querträger vorgesehen, an dem sich entgegen der Fahrtrichtung nach hinten und oben erstreckende Konsolen abstützen, die drei schräg übereinander angeordnete Schwenklager für drei jeweils quer zur Fahrtrichtung versetzte Schararme aufweisen. Jeder Schararm steht unter Wirkung einer den Schardruck erzeugenden Zugfeder, die einerseits an dem Schararm angreift, andererseits in eine Lochreihe einer Verstelleinrichtung eingehängt ist, die unterhalb des Querträgers angeordnet ist und mittels der der Schardruck einstellbar ist. Um beim Ausheben der Säeinrichtung ein Verbleiben der Säschare auf dem Boden zu verhindern, sind die Schararme nahe dem Schwenklager an der Konsole mit Anschlägen versehen, die bei Überschreiten eines bestimmten Schwenkwinkels der Schararme an der der Fahrtrichtung abgekehrten Rückseite der Konsole zur Ablage kommen. Von Nachteil bei dieser bekannten Sämaschine ist die ungünstige Schwerpunktlage in Bezug auf das Zugfahrzeug, insbesondere beim Ausheben der Säeinrichtung, da die gesamte Säeinrichtung mit der für die Lagerung der Schararme notwendigen Bauteile hinter dem Querträger liegt.

Einen in technologischer und funktionstechnischer Hinsicht weitaus besseren Aufbau einer Sämaschine beschreibt die EP 1 380 201 B1 (DE 603 02 392 T2). Diese Sämaschine erfüllt alle maßgeblichen Funktionen sowohl in gezogener als auch in Anbauversion. Sie lässt sich in jeder Version - ob mit oder ohne eigene Laufräder - während des Säbetriebs im Vorgewende oder für den Fahrbetrieb ausheben, ohne dass die Säschare den Boden berühren.

Bei dieser oben im einleitenden Absatz kurz beschriebenen Sämaschine besteht die zentrale Verstelleinrichtung aus einer in Seitenwangen der Säeinrichtung gelagerten, sich über die gesamte Breite der Säeinrichtung erstreckenden Welle, die über eine Hebelmechanik um einen gewissen Winkel verdrehbar ist. In Laufrichtung vor und hinter der Welle ist je ein durchlaufender Querträger in etwa gleicher Höhe angeordnet. Mit den Querträgern sind vordere und hintere Stützen verbunden, an denen jeweils abwechselnd vordere und hintere Schararme schwenkbar gelagert sind, die im Wesentlichen nach hinten und unten verlaufen und an ihren Enden die Säschare der vorderen bzw. hinteren Scharreihe tragen. Die hinteren Schararme sind an ihrem scharfernen Ende direkt an der hinteren Stütze schwenkbar gelagert, während die vorderen Schararme mit einer Verlängerung über das Schwenklager an der vorderen Stütze und über diese nach oben hinausragen. Der hintere Schararm weist an seiner der Laufrichtung zugekehrten Seite eine angeschweißte Öse und die Verlängerung des vorderen Schararms an ihrem oberen Ende ein Loch auf. Beide dienen zum einseitigen Einhängen je einer Zugfeder. Die Hebelarme zwischen Schwenklager und Öse bzw. zwischen Schwenklager und Loch sind gleich lang.

Auf der Welle der zentralen Verstelleinrichtung sind sich diametral erstreckende Lochbleche aufgespannt, die unter einem Winkel von etwa 45° zur Vertikalen stehen. Zwischen dem oberen Lochblech und dem Loch am oberen Ende der Verlängerung des vorderen Schararms einerseits und dem unteren Lochblech und der Öse am hinteren Schararm ist jeweils die Zugfeder eingehängt, deren Zugkraft zur Einstellung des Schardruckes durch Drehen der Welle einstellbar ist. Andererseits kann das einzelne Säschar mit seinem Schararm in Laufrichtung des Säschars liegenden Bodenwellen unter Beibehaltung der Sätiefe folgen. Um beim Ausheben der Sämaschine ein Herunterfallen der Säschare und eine Überbeanspruchung einzelner Bauteile zu vermeiden, sind an den Schararmen unterhalb der Stütze (hinterer Schararm) bzw. oberhalb der Stütze (vorderer Schararm) Begrenzungsanschläge angeordnet, die beim Verschwenken der Säschare nach unten mit der jeweiligen Stütze zusammenwirken und zugleich den maximalen Schardruck begrenzen.

Da Säeinrichtungen entgegen der Laufrichtung nach hinten weit ausladen und auch der Schardruck auf zwei Reihen verteilt relativ weit hinten zur Wirkung kommt, ergibt sich in Verbindung mit der Bauteilmasse eine ungünstige Schwerpunktlage, insbesondere beim Ausheben der Sämaschine im Vorgewende oder im Fahrbetrieb. Im letztgenannten Fall leidet auch die Lenkfähigkeit des Traktors. Es wird deshalb ein möglichst traktornaher Schwerpunkt angestrebt. Bei der bekannten Sämaschine (EP 1 380 201 B1) liegt der Schwerpunkt der Säeinrichtung bereits relativ günstig, jedoch ist die Bauteilmasse groß. Dies wiederum beruht wesentlich auf der Vielzahl der Bauteile und der Unterschiedlichkeit derselben.

Der Erfindung liegt die Aufgabe zugrunde, die Nachteile des Standes der Technik zu beheben.

Diese Aufgabe wird gemäß der Erfindung durch die Merkmale des Anspruchs 1 gelöst.

Bei dem erfindungsgemäßen Aufbau der Sämaschine ist das eigentliche Tragteil für die Aufhängung der Säschare auf einen einzigen Querträger reduziert. Damit wird gegenüber der bekannten Sämaschine ein Bauteil eingespart und zugleich das Gewicht reduziert. Durch den Fortfall des in Laufrichtung vorderen Querträgers kann der einzig verbleibende Querträger in Laufrichtung der Sämaschine nach vorne verlagert werden. Durch die Anordnung der Verstelleinrichtung unterhalb des Querträgers ergibt sich insgesamt ein tiefer liegender und nach vorne verlagerter Schwerpunkt. Am Querträger stützen sich in Laufrichtung davor und dahinter gleich ausgebildete Konsolen ab, an deren anderen Enden sich die Lageraufnahmen für die Schwenklager der vorderen und hinteren Schararme befinden. Die Konsolen, die funktionell den Stützen an den hintereinander angeordneten Querträgern bei der bekannten Sämaschine entsprechen, rücken mit dem einzigen Querträger der Erfindung gleichfalls im Sinne einer günstigen Verlagerung des Schwerpunktes nach vorne.

In vorteilhafter Ausführung ist vorgesehen, dass der Querträger ein Quadratrohr ist und die jeweils einander gegenüberliegenden Konsolen sich über einen Winkel von 90° am Quadratrohr abstützen, wobei das Quadratrohr mit seiner einen Diagonalen vertikal angeordnet ist und die Konsolen die in der horizontalen Diagonalen liegenden Ecken des Quadratrohrs mit V-förmigen Stützflächen umgreifen und sich von dort unter einem Winkel im Wesentlichen nach vorne und unten bzw. nach hinten und unten erstrecken.

Durch diese Ausführung kann das Gewicht der Aufhängung und Führung der Schararme tiefer liegen.

Vorzugsweise sind sämtliche Konsolen identisch ausgebildet und stützen sich abwechselnd von vorne und hinten am Querträger ab, wobei sie bezüglich des Querträgers und der Verstelleinrichtung, die in einer Vertikalen untereinander angeordnet sind, spiegelsymmetrisch zu der Vertikalen angeordnet sind.

Eine vorteilhafte Ausgestaltung zeichnet sich dadurch aus, dass jede Konsole aus einem im Wesentlichen zu einer U-Form gebogenen Stahlblech gebildet ist, das zwei auf Abstand angeordnete U-Stege aufweist, die mit ihren einander zugekehrten Kanten in Verbindung mit an ihnen auslaufenden Kanten von V-förmigen Einschnitten in den parallel gegenüberliegenden U-Schenkeln die Stützflächen bilden.

Jede Konsole besteht demnach aus einem Blechformteil und für sämtliche Konsolen sind gleiche Fertigungsgänge erforderlich. Dadurch werden die Herstell- und Lagerkosten minimiert. Auch lassen sich die Konsolen bei Änderung des Abstandes der Säreihen am Querträger problemlos umsetzen, ohne dass es zu Verwechslungen oder Vertauschungen kommen kann.

In diese Richtung zielt auch die weitere Maßnahme, dass die auf Abstand angeordneten U-Stege etwa mittige Löcher für den Durchgriff von Bügelschrauben zum spielfreien Aufspannen der Konsolen auf das den Querträger bildende Quadratrohr aufweisen.

Da Quadratrohre erhebliche Querschnittstoleranzen aufweisen, die allein durch den V-förmigen Abschnitt an der Konsole nicht ausgeglichen werden können, sorgen die Bügelschrauben für einen spielfreien Sitz der Konsolen auf dem Quadratrohr. Die Konsolen können auf diese Weise fest positioniert werden und auch im rauen betrieblichen Einsatz nicht verrutschen.

Zur Stabilisierung sind die U-Schenkel in dem dem U-Steg fernen Bereich durch zwei Distanzstücke verbunden, die sie auf Abstand halten und gegeneinander aussteifen. Sämtliche Konsolen bestehen aus den gleichen Einzelteilen gleichen Aufbaus, so dass sie durch Fertigungsroboter kostengünstig hergestellt werden können.

In bevorzugter Ausführung ist vorgesehen, dass die Distanzstücke als Bolzen ausgebildet sind, von denen jeweils einer einen Begrenzungsanschlag für die Schwenkbewegung des ihm zugeordneten Schararms beim Ausheben der Säeinrichtung bildet.

Die bolzenförmigen Distanzstücke erfüllen somit neben ihrer aussteifenden Funktion für die U-Schenkel der Konsolen eine weitere Aufgabe als Begrenzungsschläge. Sie sind in einem solchen Abstand voneinander und in einer solchen Positionierung angeordnet, dass unabhängig vom Einbau der Konsole vor oder hinter dem Querträger jeweils einer der Bolzen als Begrenzungsanschlag für die Schwenkbewegung des ihm zugeordneten Schararms dient.

Im Sinne der Standardisierung und Vereinheitlichung der Bauteile ist erfindungsgemäß weiterhin vorgesehen, dass jeder Schararm aus zwei gleich konturierten Flacheisen gebildet ist, die im Einbauzustand einen ersten, im Wesentlichen senkrechten Abschnitt und einen zweiten, sich entgegen der Laufrichtung nach hinten im Wesentlichen horizontal erstreckenden Abschnitt aufweisen, wobei die Flacheisen in diesen Abschnitten parallel verlaufen und anschließend nach oben leicht ansteigend aufeinander zulaufen und wiederum in etwa horizontalen Endabschnitten in enger Parallellage zur Aufnahme eines Scharträgers für ein Säschar auslaufen.

Die Schararme bestehen beim Stand der Technik aus gebogenen Rohren mit angepressten oder aufgepressten Anschlussstücken für die Schwenklager und unterschiedlich ausgebildeten und gesondert angebrachten Anschlussteilen für die den Schardruck erzeugenden Tragfedern und für die Säschare selbst. Die Fertigung dieser Schararme ist aufwendig, ihr Gewicht übersteigt das für ihre eigentliche Funktion, nämlich die federnde Schwenkführung der Schararme notwendige Maß. Bei der zuvor beschriebenen Ausführungsform der Erfindung sind sämtliche Schararme - ob vordere oder hintere - gleich ausgebildet. Die jeden Schararm bildenden Flacheisen und deren Formgebung bieten keine fertigungstechnischen Probleme, lassen sich also einfach und kostengünstig herstellen. Die unter sich identischen Anschlüsse für die Schararme an den Konsolen und für die Scharträger der Säschare sind in die Formgebung der Flacheisen integriert.

In diesem Sinn ist weiterhin vorgesehen, dass die Flacheisen im ersten und zweiten Abschnitt parallel zueinander angeordnet und im Bereich des freien Endes, des Übergangs vom ersten in den zweiten Abschnitt und vor dem Übergang in den ansteigenden Abschnitt durch gleichlange Stegbleche verbunden sind. Die Stegbleche stabilisieren den einzelnen Schararm und erhöhen vor allem die Quer- und Torsionssteifigkeit.

Für die Bildung des Schwenklagers jedes Schararms ist zwischen den beiden Stegblechen im ersten Abschnitt der Flacheisen eine Lagerbuchse eingesetzt, die in Verbindung mit der Lageraufnahme in den die Flacheisen außenseitig übergreifenden U-Schenkeln der Konsole das Schwenklager für den Scherarm bildet.

Die Lagerbuchsen sind für sämtliche Schararme gleich ausgebildet und an gleicher Stelle zwischen den Flacheisen jedes Schararms eingesetzt, also an gleicher Stelle positioniert.

Aufgrund der weiteren Maßnahme, dass die Stegbleche zwischen den parallelen Flacheisen des Schararms mittig Löcher aufweisen, die je nach Einbaulage des Schararms eines der beiden Widerlager der auf diesen Schararm wirkenden Federkraft bilden, sind in Verbindung mit den vorstehend beschriebenen Ausbildungen sämtliche notwendigen Funktionsteile am Schararm - ob vorderer oder hinterer Schararm - in identischer Weise verwirklicht.

Die Schararme bestehen aus den gleichen Einzelteilen in gleicher Anzahl, die sich durch automatisch arbeitende Maschinen zusammenfügen lassen. Die Kosten für Fertigung und Lagerhaltung beim Hersteller, wie auch die Vorhaltung von Ersatzteilen beim Maschinenhandel sind kostengünstig. Verschleißteile lassen sich schnell durch Neuteile ersetzen.

Eine weitere bevorzugte Ausführungsform der Erfindung zeichnet sich dadurch aus, dass die Verstelleinrichtung ein sich über die gesamte Säbreite erstreckendes Quadratrohr aufweist, das auf einander gegenüberliegenden, an der Säeinrichtung befestigten Zapfen gelagert und über ein Stellorgan verdrehbar ist. Das Quadratrohr weist außer den bekannten fertigteilstechnischen Eigenschaften (Biege- und Torsionssteifigkeit) bei geringem Gewicht den Vorteil auf, dass sich aufgrund des polygonalen Profils Anschlussteile auf dem Umfang besser und sicher positionieren lassen als auf einem Rundrohr oder einer Welle.

Unter Nutzung des vorgenannten Vorteils ist gemäß einer vorteilhaften Ausbildung vorgesehen, dass auf das Quadratrohr einander gegenüberliegend durchlaufende Winkelbleche aufgespannt sind, die mindestens 45° zu den gelochten Leisten nach außen abgebogen sind, und dass in die gegenüberliegenden Lochleisten je eine Schraubenfeder eingehängt ist, die jeweils mit ihrem anderen Ende am Widerlager des ihr zugewiesenen Schararms angreift. Die beiden Winkelbleche sind vorzugsweise mit Bügelschrauben auf das Quadratrohr spielfrei aufgespannt. Damit ergibt sich eine unverrückbare, aber einstellbare Position der Widerlager für die den Schardruck bestimmenden Federn.

Für die Verdrehung des Quadratrohrs zur Einstellung des Schardrucks kann jede beliebige Stellmechanik verwendet werden, die ein Drehmoment auf das Quadratrohr ausübt. Gemäß einem Ausführungsbeispiel ist vorgesehen, dass das Stellorgan eine Spindel ist, die über eine an der Säeinrichtung angeordnete Lagermutter auf eine an einem mit dem Quadratrohr der Verstelleinrichtung verbundenen Hebel angeordnete Spindelmutter wirkt.

Weitere Einzelheiten und Vorteile der Erfindung ergeben sich aus der nachfolgenden Beschreibung von in der Zeichnung wiedergegebenen Ausführungsbeispielen. In der Zeichnung zeigen:
- Fig. 1: eine Seitenansicht der Säeinrichtung;
- Fig. 2: einen vergrößerten Ausschnitt der bevorzugten Ausführungsform der Säeinrichtung;
- Fig. 3: eine Seitenansicht eines vorderen Schararms und seiner Aufhängung;
- Fig. 4: eine perspektivische Ansicht des Schararms gemäß Fig. 3 in einer um ca. 135° gegenüber der Vertikalen gedrehten Darstellung;
- Fig. 5: eine der Fig. 3 entsprechende Seitenansicht eines hinteren Schararms und seiner Aufhängung und
- Fig. 6: eine Draufsicht auf den Schararm gemäß Fig. 5 in einer Explosionsdarstellung.

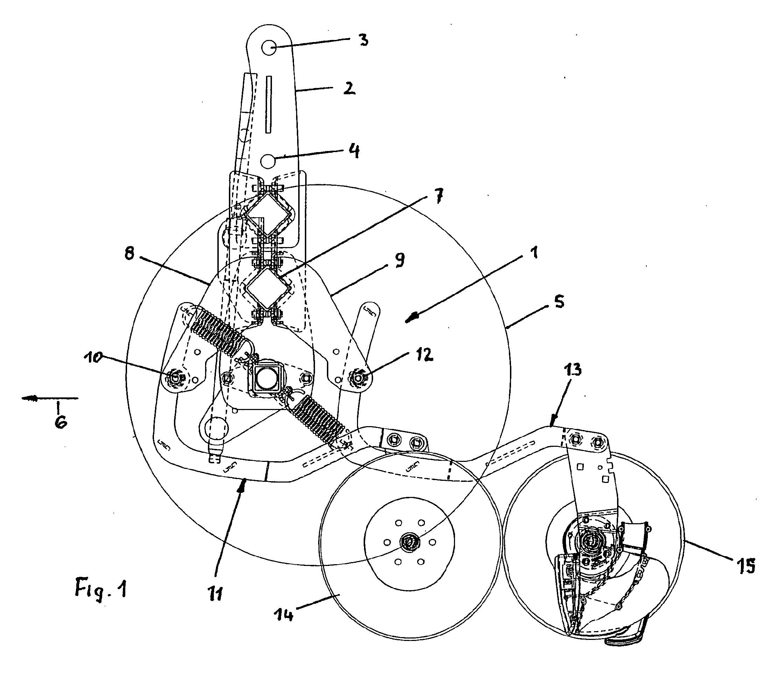

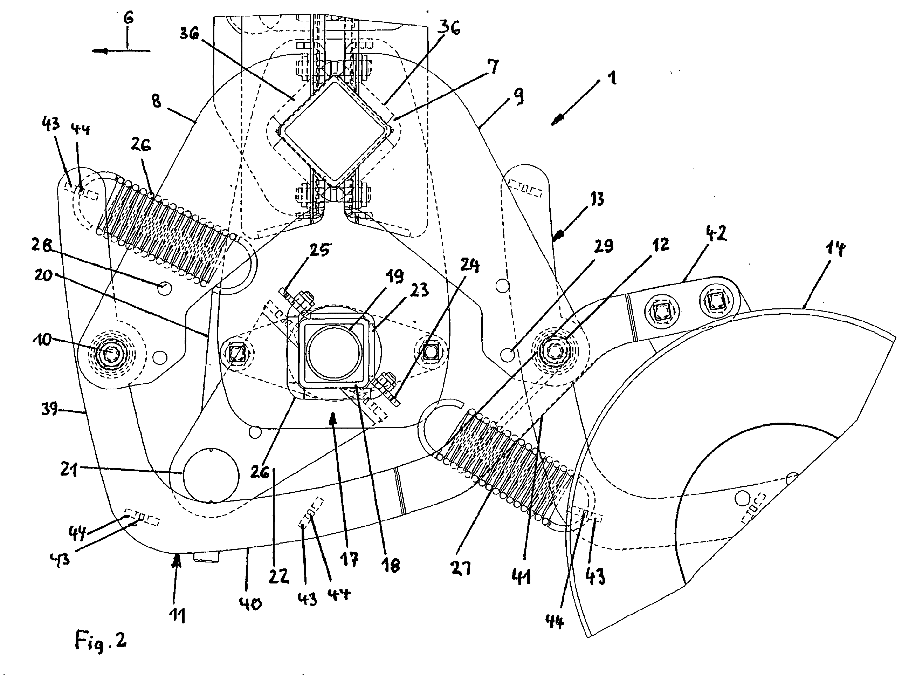

Die in Fig. 1 und 2 gezeigte Säeinrichtung 1 ist mittels zweier Stützen 2, deren Abstand senkrecht zur Zeichenebene etwa der Breite des nicht gezeigten Sämaschinenbehälters entspricht, über die Löcher 3 und 4 an der Sämaschine angebracht. Über die Stützen 2 lässt sich die Einsatztiefe der Säeinrichtung einstellen. Die Sämaschine kann als Kastensämaschine mit einer Schwerkraftzuführung des Saatgutes zu den Säscharen oder als pneumatische Sämaschine ausgebildet sein. Die Sämaschine kann eigene Laufräder 5 aufweisen und an ein vorlaufendes Bodenbearbeitungsgerät angeschlossen oder vom Dreipunktgestänge eines Traktors aufgenommen sein. Die Säeinrichtung 1 ist mit jeder dieser bekannten Sämaschinen kombinierbar. Die Sämaschine, zumindest aber die Säeinrichtung 1 lässt sich ausheben, wobei die Säeinrichtung und beim gezeigten Ausführungsbeispiel auch die Laufräder 5 vom Boden freikommen. Zumindest im Säbetrieb bewegt sich die Säeinrichtung 1 in der Laufrichtung 6, die der Fahrtrichtung des Traktors entspricht.

Die Säeinrichtung 1, die herkömmlicherweise auch als Scharschiene bezeichnet wird, weist einen sich wenigstens über die Säbreite erstreckenden Querträger 7 auf, der als Quadratrohr ausgebildet ist. Das Quadratrohr ist mit seiner einen Diagonalen etwa vertikal angeordnet. An dem Quadratrohr 7 sind vordere und hintere Konsolen 8, 9 angebracht, deren Abstand quer zur Laufrichtung 6 dem Abstand der Säreihen entspricht. Der Abstand lässt sich verändern. Jede vordere Konsole 8 bildet an ihrem nach vorne und unten weisenden Ende ein Schwenklager 10 für einen vorderen Schararm 11 und das nach hinten und unten weisende Ende der hinteren Konsole 9 bildet ein Schwenklager 12 für den hinteren Schararm 13. An den bodennahen Enden der Schararme 11, 13 sind vordere bzw. hintere Säschare, beim gezeigten Ausführungsbeispiel Scheibenschare 14, 15 gelagert.

Vertikal unterhalb des Querträgers 7 ist die Verstelleinrichtung 17 zum Einstellen des Schardrucks angeordnet. Sie weist ein Quadratrohr 18 auf, das an seinen beiden Enden auf Zapfen 19 gelagert ist. Die Zapfen 19 sind an gegenüberliegenden Seitenwangen befestigt, die wiederum an einem maschinenfesten Teil, z.B. der Stütze 2 angeordnet sind.

Das Quadratrohr 18 ist auf den Zapfen 19 mittels eines beliebigen Stellorgans, z.B. einer Stellspindel 20, die über ein am Ende eines Hebelarms 22 angeordnetes Spindellager 21 wirkt, verdrehbar.

Auf das Quadratrohr 18 sind auf diagonal gegenüberliegende Ecken durchlaufende Winkelschienen 23 mit gleichfalls durchlaufenden nach außen abgebogenen Lochleisten 24, 25 mittels Bügelschrauben 26 spielfrei aufgespannt. Die einander gegenüberliegenden Lochleisten 24 und 25 bilden eines der Widerlager für Schraubenfedern 26 bzw. 27, deren anderes Widerlager sich jeweils am freien Ende des vorderen Schararms 11 jenseits des Schwenklagers 10 bzw. an einem in Fig. 2 hinter dem vorderen Schararm 11 liegenden Punkt des hinteren Schararms 13 unterhalb des Schwenklagers 12 befindet.

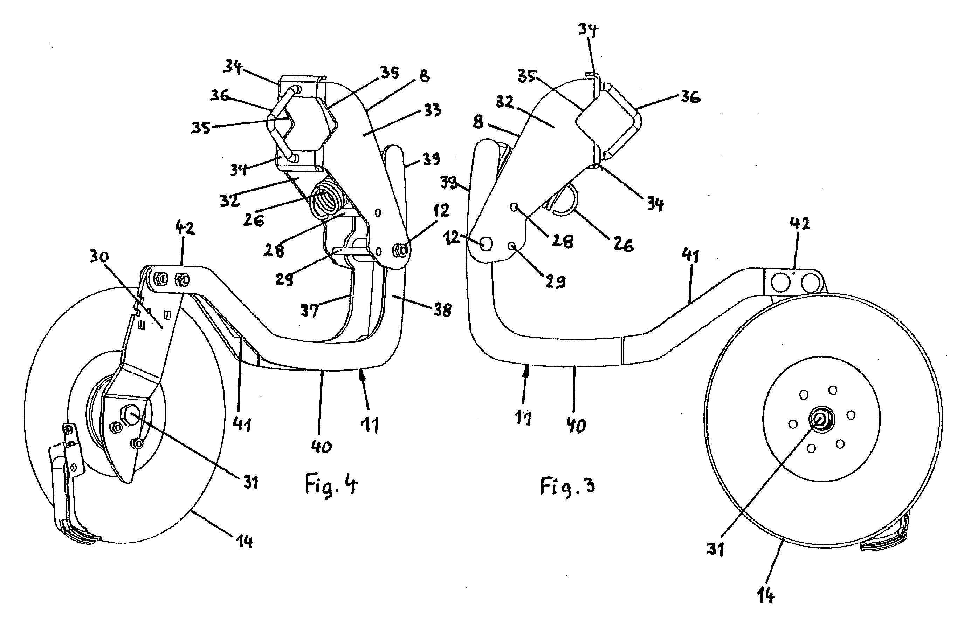

Durch Verdrehen des Quadratrohrs 18 beispielsweise im Uhrzeigersinn, wird das freie, jenseits des Schwenklagers 10 liegende Ende des vorderen Schararms 11 nach innen gezogen, der Schardruck auf das vordere Säschar 14 also erhöht. Gleichermaßen wird durch die Zugfeder 27 der unterhalb des Schwenklagers 12 liegende Hebelarm des hinteren Schararms 13 nach innen gezogen, so dass auch der Schardruck des hinteren Säschars 15 erhöht wird. Durch diesen Aufbau der Säeinrichtung 1 mit der Verstelleinrichtung 17 wird bei Drehung des Quadratrohrs 18 der Schardruck für die Schare beider Scharreihen gleichermaßen angehoben oder abgesenkt. Im unteren Bereich der Konsolen 8, 9 sind in Fig. 2 Begrenzungsanschläge 28 bzw. 29 erkennbar, die die Schwenkbewegung des vorderen Schararms 11 bzw. des hinteren Schararms 13 um die Schwenklager 10 bzw. 12 nach unten begrenzen, um beim Ausheben der Sämaschine bzw. der Säeinrichtung 1 zu verhindern, dass die Säschare 14, 15 nach unten fallen. Auf die Begrenzungsanschläge 28, 29 wird noch im Zusammenhang mit den Fig. 3 bis 5 näher eingegangen.

In Fig. 3 und 4 ist einer der vorderen Schararme 11 mit der ihn jeweils in einem Schwenklager 12 aufnehmenden vorderen Konsole 8 in verschiedenen Ansichten gezeigt. Gleichermaßen ist einerseits eine Ansicht auf die Außenseite der dem Schararm 11 zugeordneten Scharscheibe 14 (Fig. 3) bzw. auf deren Innenseite (Fig. 4) erkennbar. Das Scheibenschar 14 ist an einem Scharträger 30 bei 31 drehbar gelagert. Der Scharträger 30 ist seinerseits in Aufnahmen am Ende des Schararms 11 befestigt.

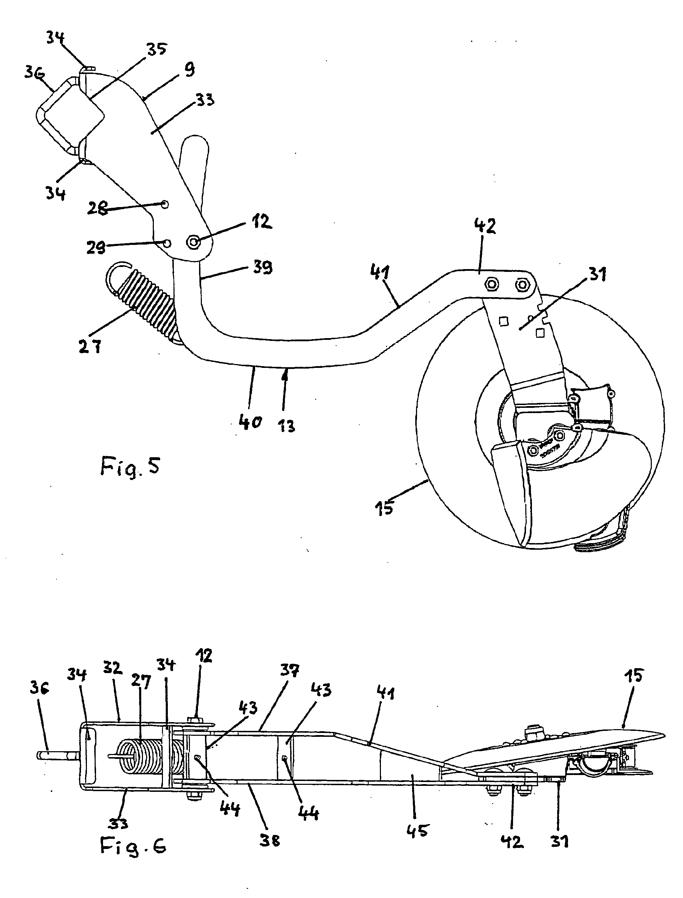

Die vordere und die hintere Konsole 9 (Fig. 5) sind identisch ausgebildet. Wie insbesondere aus Fig. 4 und Fig. 6 ersichtlich, bestehen sie aus einem Blechformteil, das im Wesentlichen in eine U-Form gebogen ist, wobei die beiden U-Schenkel 32, 33 über einen zweiteiligen U-Steg 34 in Verbindung stehen. Die einander zugekehrten Innenkanten der U-Stege 34 begrenzen einen V-förmi.gen Ausschnitt 35 in den beiden Schenkeln 32 und 33 der Konsole. Die beiden U-Stege 34 weisen mittig Löcher für den Durchgriff einer Bügelschraube 36 auf. Die U-Schenkel 32, 33 sind in Richtung auf das Schwenklager 12 durch Bolzen 28, 29 verbunden und ausgesteift, wobei der Bolzen 28 zugleich den in Verbindung mit Fig. 2 beschriebenen Begrenzungsanschlag für die Schwenkbewegung des vorderen Schararms 11 bildet, während der untere Bolzen 29 lediglich aussteifende Funktionen hat. Bei der hinteren Konsole 9 (Fig. 5) hingegen dient der untere Bolzen 29 als Begrenzungsanschlag für die Bewegungen des hinteren Schararms 13 um das Schwenklager 12. Die vordere und die hintere Konsole 8 bzw. 9 sind also identisch ausgebildet und bestehen aus denselben Einzelteilen. Die Konsole 8 wird mit ihrem V-förmigen Einschnitt 35 auf die horizontale Diagonale des Quadratrohrs des Querträgers 7 aufgesetzt und mittels der Bügelschraube 36 spielfrei aufgespannt. In gleicher Weise wird die hintere Konsole 9 (Fig. 5) mit ihrem V-förmigem Ausschnitt 35 auf die gegenüberliegende Seite des Querträgers mittels der Bügelschraube 36 spielfrei aufgespannt (Fig. 2).

Jeder Schararm 11, 12 besteht aus zwei Flacheisen 37, 38 (Fig. 4 und 5), die in ihrer Form, wie sie in Fig. 3 bis 5 gezeigt sind, gleich ausgebildet sind. Sie verlaufen im oberen etwa vertikalen Abschnitt 39 (Fig. 3 und 5) und in dem daran anschließenden etwa horizontalen Abschnitt 40 parallel und weisen anschließend einen nach oben ansteigenden Abschnitt 41 auf, der wiederum in einem horizontalen Abschnitt 42 endet. In diesem horizontalen Abschnitt 42 sind die beiden Flacheisen 37, 38 in enge Parallellage zusammengeführt und nehmen dort den Scharträger 30 bzw. 31 auf. Im Bereich ihrer freien Enden jenseits der Schwenklager 10 bzw. 12 sowie im Bereich des Übergangs vom vertikalen in den horizontalen Abschnitt 40 und im Bereich des letzteren sind die beiden Flacheisen durch identische Stegbleche 43 verbunden und ausgesteift, die jeweils mit einem mittigen Loch versehen sind. Die Stegbleche sind wiederum identische Einzelteile. Das Loch 44 im Stegblech 43 am vertikalen Abschnitt 39, das jenseits des Schwenklagers 10 angeordnet ist, dient als Öse zum Einhängen der Schraubenfeder 26 (Fig. 2) und das am Übergang des vertikalen Abschnitts 39 in den horizontalen Abschnitt 40 des hinteren Schararms angeordnete Stegblech 43 mit seinem Loch 44 dient als Öse zum Einhängen der Schraubenfeder 27. Auf diese Weise wirken die Schraubenfedern 26, 27 bezüglich der Schwenklager 10, 12 an gleichlangen Hebelarmen des vorderen Schararms 11 bzw. des hinteren Schararms 13. In dem ansteigenden Abschnitt 41 laufen die Flacheisen 37, 38 aufeinander zu und sind dort durch ein eingeschweißtes Winkelblech 45 verbunden.

### Bezugszeichenliste

| | | | |
|---|---|---|---|
| 1 | Säeinrichtung | 20 | Spindel |
| 2 | Stützen | 21 | Spindellager |
| 3 | Loch | 22 | Hebel |
| 4 | Loch | 23 | Winkelschiene |
| 5 | Laufräder | 24 | Lochleiste |
| 6 | Laufrichtung | 25 | Lochleiste |
| 7 | Querträger | 26 | Schraubenfeder |
| 8 | vordere Konsole | 27 | Schraubenfeder |
| 9 | hintere Konsole | 28 | Begrenzungsanschlag |
| 10 | Schwenklager | 29 | Begrenzungsanschlag |
| 11 | vorderer Schararm | 30 | Scharträger |
| 12 | Schwenklager | 31 | Scharträger |
| 13 | hinterer Schararm | 32 | U-Schenkel |
| 14 | vorderes Säschar | 33 | U-Schenkel |
| 15 | hinteres Säschar | 34 | U-Stege |
| 17 | Verstelleinrichtung | 35 | V-Ausschnitt |
| 18 | Quadratrohr | 36 | Bügelschraube |
| 19 | Zapfen | 37 | Flacheisen |
| 38 | Flacheisen | | |
| 39 | vertikaler Abschnitt | | |
| 40 | horizontaler Abschnitt | | |
| 41 | ansteigender Abschnitt | | |
| 42 | horizontaler Abschnitt | | |
| 43 | Stegbleche | | |
| 44 | Loch | | |
| 45 | Winkelblech | | |

## Patentansprüche

1. Sämaschine mit einem Saatgutbehälter, einem diesen tragenden Rahmen und einer am Rahmen höhenverstellbar und lösbar angebrachten Säeinrichtung (1), die einen sich über deren Breite erstreckenden Querträger (7) und eine in Laufrichtung (6) der Sämaschine davor und dahinter angeordnete, der Anzahl der Säreihen entsprechende Anzahl von Konsolen (8 bzw. 9) aufweist, von denen sich benachbarte Konsolen jeweils von vorne (8) bzw. von hinten (9) am Querträger (7) abstützen und etwa im Abstand zweier Säreihen nach vorne bzw. nach hinten erstrecken und im Bereich ihrer Enden jeweils eine Lageraufnahme (10, 12) bilden, und weiterhin Säschare (14, 15) aufweist, die in Laufrichtung (6) der Sämaschine in zwei Reihen hintereinander und quer zur Laufrichtung (6) jeweils versetzt zueinander angeordnet und über je einen Schararm (11, 13) an der Lageraufnahme (10, 12) der vorderen bzw. hinteren Konsole (8 bzw. 9) unter Federeinwirkung schwenkbar gelagert sind, wobei die zur Erzeugung eines variablen Schardrucks wirksame Federkraft (26, 27) über eine zentral auf alle Schararme (11, 13) gleichwirkende Verstelleinrichtung (17), die etwa vertikal unterhalb des Querträgers (7) angeordnet ist, einstellbar ist.

2. Sämaschine nach Anspruch 1, **dadurch gekennzeichnet, dass** der Querträger (7) ein Quadratrohr ist und die jeweils einander gegenüberliegenden Konsolen (8 bzw. 9) sich über einen Winkel von etwa 90° am Quadratrohr abstützen.

3. Sämaschine nach Anspruch 1 oder 2, **dadurch gekennzeichnet, dass** das Quadratrohr (7) mit seiner einen Diagonalen vertikal angeordnet ist und die Konsolen (8, 9) die in der horizontalen Diagonalen liegenden Ecken des Quadratrohrs mit V-förmigen Stützflächen umgreifen und sich von dort unter einem Winkel im Wesentlichen nach vorne und unten bzw. nach hinten und unten erstrecken.

4. Sämaschine nach einem der Ansprüche 1 bis 3, **dadurch gekennzeichnet, dass** sämtliche Konsolen (8, 9) identisch ausgebildet sind.

5. Sämaschine nach einem der Ansprüche 1 bis 4, **dadurch gekennzeichnet, dass** jede Konsole (8, 9) aus einem im Wesentlichen zu einer U-Form gebogenen Stahlblech gebildet ist, das zwei auf Abstand angeordnete U-Stege (34) aufweist, die mit ihren einander zugekehrten Kanten in Verbindung mit an ihnen auslaufenden Kanten von V-förmigen Einschnitten (35) in den parallel gegenüberliegenden U-Schenkeln (32, 33) die Stützflächen bilden.

6. Sämaschine nach einem der Ansprüche 1 bis 5, **dadurch gekennzeichnet, dass** die auf Abstand angeordneten U-Stege (34) etwa mittige Löcher für den Durchgriff von Bügelschrauben (36) zum spielfreien Aufspannen der Konsolen (8, 9) auf das den Querträger (7) bildende Quadratrohr aufweisen.

7. Sämaschinen nach einem der Ansprüche 1 bis 6, **dadurch gekennzeichnet, dass** die U-Schenkel (32, 33) der Konsole (8 bzw. 9) in dem dem U-Steg (34) fernen Bereich durch zwei Distanzstücke (28, 29) verbunden sind.

8. Sämaschinen nach einem der Ansprüche 1 bis 7, **dadurch gekennzeichnet, dass** die Distanzstücke als Bolzen (28, 29) ausgebildet sind, von denen jeweils einer einen Begrenzungsanschlag für die Schwenkbewegung des ihm zugeordneten Schararms (11 bzw. 13) beim Ausheben der Säeinrichtung (1) bildet.

9. Sämaschinen nach einem der Ansprüche 1 bis 8, **dadurch gekennzeichnet, dass** jeder Schararm (11, 13) aus zwei gleich konturierten Flacheisen (37, 38) gebildet ist, die im Einbauzustand einen ersten, im Wesentlichen senkrechten Abschnitt (39) und einen zweiten sich entgegen der Laufrichtung (6) nach hinten im Wesentlichen horizontal erstreckenden Abschnitt (40) aufweisen, wobei die Flacheisen in diesen Abschnitten parallel verlaufen und anschließend nach oben leicht ansteigend aufeinander zulaufen (41) und wiederum in etwa horizontalen Endabschnitten (42) in enger Parallellage zur Aufnahme eines Scharträgers (31) für ein Säschar (14, 15) auslaufen.

10. Sämaschine nach einem der Ansprüche 1 bis 9, **dadurch gekennzeichnet, dass** die Flacheisen (37, 38) im ersten und zweiten Abschnitt (39, 40) im Bereich des freien Endes sowie des Übergangs vom ersten in den zweiten Abschnitt und vor dem Übergang in den ansteigenden Abschnitt (41) durch gleichlange Stegbleche (43) verbunden sind.

11. Sämaschinen nach einem der Ansprüche 1 bis 10, **dadurch gekennzeichnet, dass** zwischen den beiden Stegblechen (43) im ersten Abschnitt (39) der Flacheisen (37, 38) eine Lagerbuchse eingesetzt ist, die in Verbindung mit der Lageraufnahme in den die Flacheisen außenseitig übergreifenden U-Schenkeln (32, 33) der Konsole (8, 9) das Schwenklager (10, 12) für den Schararm (11, 13) bildet.

12. Sämaschine nach einem der Ansprüche 1 bis 11, **dadurch gekennzeichnet, dass** die Stegbleche (43) zwischen den parallelen Flacheisen (37, 38) des Schararms mittig Löcher aufweisen, die je nach Einbaulage des Schararms eines der beiden Widerlager für die auf diesen Schararm wirkende Federkraft bilden.

13. Sämaschine nach einem der Ansprüche 1 bis 12, **dadurch gekennzeichnet, dass** die Verstelleinrichtung (17) ein sich über die gesamte Säbreite erstreckendes Quadratrohr (18) aufweist, das auf einander gegenüberliegenden, an der Säeinrichtung (1) befestigten Zapfen (19) gelagert und über ein Stellorgan (20) verdrehbar ist.

14. Sämaschinen nach Anspruch 13, **dadurch gekennzeichnet, dass** auf das Quadratrohr (18) einander gegenüberliegend durchlaufende Winkelbleche (23) aufgespannt sind, die um etwa 45° zu gelochten Leisten (24, 25) nach außen abgebogen sind, und dass in die gegenüberliegenden Lochleisten je eine Schraubenfeder (26, 27) eingehängt ist, die jeweils mit ihrem anderen Ende am Widerlager des ihr zugewiesenen Schararms (11, 13) angreift.

15. Sämaschinen nach einem der Ansprüche 1 bis 14, **dadurch gekennzeichnet, dass** die Winkelbleche (23) mit Bügelschrauben auf das Quadratrohr (18) aufgespannt sind.

16. Sämaschine nach einem der Ansprüche 1 bis 15, **dadurch gekennzeichnet, dass** das Stellorgan eine Spindel (20) ist, die über eine an der Säeinrichtung (1) angeordnete Spindelmutter auf eine an einem mit dem Quadratrohr (18) der Verstelleinrichtung (17) verbundenen Hebel (22) angeordnetes Spindellager wirkt.
